# EUROPÄISCHE PATENTSCHRIFT

(11) **EP 0 422 367 B1**
(45) Veröffentlichungstag und Bekanntmachung des Hinweises auf die Patenterteilung: **26.05.1993**
(21) Anmeldenummer: 90116239.6
(22) Anmeldetag: 24.08.1990
(51) Int. Cl.: A01D 43/08

(54) **Häcksler zum Zerkleinern von halmförmigem Erntegut**
Forage crop chopper
Hacheuse pour fragmenter des produits de récolte

(30) Priorität: 10.10.1989 DE 3933779
(43) Veröffentlichungstag der Anmeldung: 17.04.1991
(73) Patentinhaber: CLAAS OHG, D-33426 Harsewinkel (DE)
(72) Erfinder: Klinger, Ernst, D-4834 Harsewinkel 1 (DE); Isfort, Heinrich, D-4408 Dülmen (DE)
(74) Vertreter: Patentanwälte Eisele, Otten & Roth

(56) Entgegenhaltungen:
- EP-A- 0 244 892
- DE-A- 2 061 494
- DE-A- 3 538 554
- DE-A- 3 727 156
- DE-B- 1 265 481
- FR-A- 2 539 950
- FR-A- 2 553 254
- GB-A- 2 079 574

## Beschreibung

Die Erfindung betrifft einen Häcksler zum Zerkleinern von halmförmigem Erntegut, insbesondere von Mais, mit einer Messertrommel, einem nachgeschalteten Paar Quetschwalzen (auch Cracker- oder Konditionierwalzen genannt) und einem nachgeschalteten Nachbeschleuniger-Rotor mit jeweils parallelen Achsen.

Ein derartiger Häcksler ist aus der FR-A-2 553 254 bekannt. Bei diesem Feldhäcksler ist der Nachbeschleuniger-Rotor bauartbedingt wesentlich schmäler, d. h. in Achsrichtung kürzer, als die Messertrommel und die Quetschwalzen. Daher verjüngt sich der Förderkanal von der Breite der Quetschwalzen auf die wesentlich geringere Breite des Nachbeschleunigers, was Förderprobleme aufwirft, weil die Schleuderwirkung der Quetschwalzen trotz hoher Drehzahlen begrenzt ist.

Der Erfindung liegt die Aufgabe zugrunde, den Fördergutdurchsatz ohne wesentliche Erhöhung der Antriebsleistung zu verbessern.

Diese Aufgabe wird erfindungsgemäß dadurch gelöst, daß die Messertrommel, die Quetschwalzen und der Nachbeschleuniger-Rotor die gleiche Breite haben. Durch diesen Vorschlag wird die Funktionssicherheit, insbesondere im Graseinsatz, erhöht, weil die Verbreiterung des Nachbeschleunigers die Saug- und Blaswirkung erhöht.

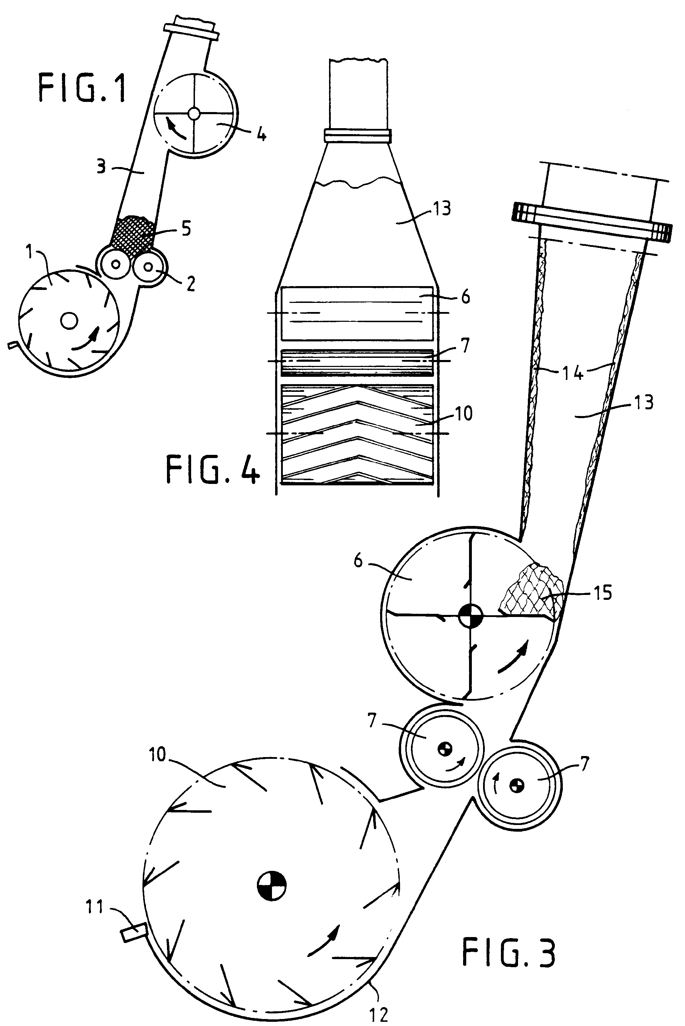

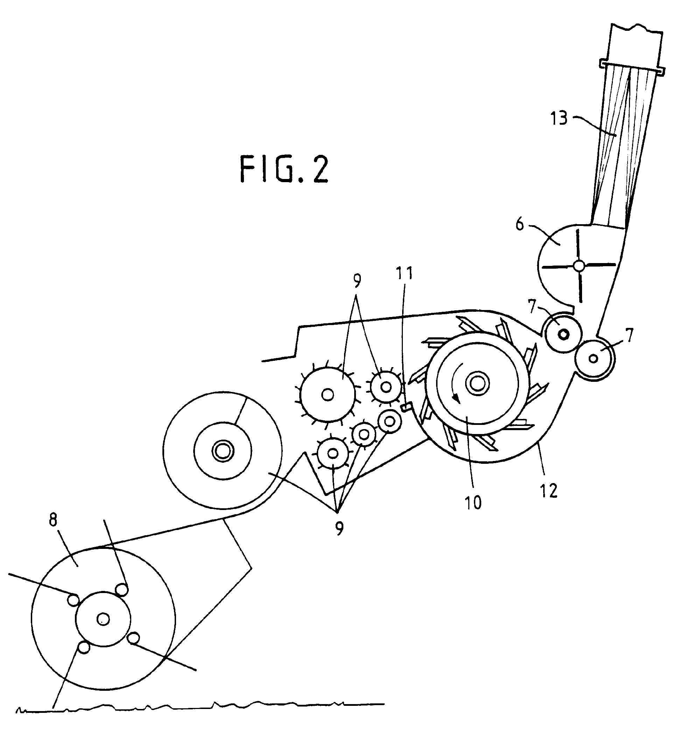

Bei denjenigen bekannten Häckslern, deren Förderschacht im Anschluß an die Quetschwalzen steil ansteigt, kommt ein weiteres Problem hinzu. An den Innenwandungen des steilen Förderschachts setzt sich stark zerkleinertes Fördergut ab und verfestigt. Während die Maschine arbeitet, stellt dies keine Beeinträchtigung dar, da die sich aufbauende Schicht immer wieder vom Förderstrom mitgerissen und ausgetragen wird. Beim Transport der Erntemaschine, z. B. von Feld zu Feld, lösen sich jedoch die Schichten infolge der Erschütterung ab und bilden auf den und oberhalb der Quetschwalzen eine erhebliche Ansammlung (Fig. 1). Dies führt bei Wiederinbetriebnahme der Maschine zu einer völligen Blockierung des Fördersystems.

Es wird daher in Weiterbildung der Erfindung vorgeschlagen, daß der Nachbeschleuniger-Rotor unmittelbar oberhalb der Quetschwalzen angeordnet ist. Der Förderschachtabschnitt, an dem sich im Betrieb Gutteile ansetzen können, beginnt somit erst oberhalb des Nachbeschleunigers. Die in den Förderschacht hineinragenden Rotorblätter fangen das herabfallende Gut auf und schleudern es bei Wiederinbetriebnahme nach außen. Eine Brückenbildung und damit völlige Verstopfung oberhalb der Quetschwalzen ist somit ausgeschlossen.

Es ist besonders vorteilhaft, wenn der Nachbeschleuniger-Rotor die gleiche Drehrichtung wie die Messertrommel hat, so daß sich deren Achsen beide auf der gleichen Seite des Fördertrakts befinden. Dabei wird die Wirkung des Nachbeschleunigers dadurch erhöht, daß die Hauptförderrichtung einen Knick nach oben macht, also die Förderrichtung von der Messertrommel zum Nachbeschleuniger-Rotor weniger steil verläuft als nach dem Rotor. Gleichzeitig schirmen die Rotorblätter die Quetschwalzen besser ab, weil sie auf einem längeren Bogenabschnitt an die Wandung des Förderschachts heranreichen. Der Nachbeschleuniger kann aber auch an der gegenüberliegenden Seite des Förderschachts angebracht sein und mit zur Messertrommel entgegengesetzter Drehrichtung laufen. In diesem Fall knickt die Förderrichtung vorzugsweise im Sinne einer geringeren Steigung von der Messertrommel weg.

Je größer die Zahl der Rotorblätter ist, desto besser ist die Abschirmwirkung. Werden jedoch im Hinblick auf eine erhöhte Förderleistung beispielsweise nur vier Rotorblätter verwendet, so können mit einem Rastmechanismus o. dgl. Vorkehrungen getroffen werden, um den Beschleunigungsrotor nach dem Abschalten seines Antriebs in einer Winkelstellung stillzusetzen, in welcher wenigstens eines seiner Rotorblätter den Förderschacht voll absperrt.

Ein Häcksler bekannter Bauart und ein Ausführungsbeispiel der Erfindung werden nachfolgend anhand der Zeichnung erläutert. Im einzelnen zeigt
- Fig. 1: die schematische Seitenansicht eines bekannten Häckslers,
- Fig. 2: die Seitenansicht eines Feldhäckslers nach der Erfindung mit den zugehörigen Vorrichtungen zur Aufnahme und Zuführung des Erntegutes,
- Fig. 3: eine entsprechende Darstellung der Messertrommel und der anschließenden Einrichtungen des Häckslers nach Fig. 2 im größeren Maßstab und
- Fig. 4: eine schematische Frontansicht der Vorrichtung nach Fig. 3.

Der bekannte Häcksler nach Fig. 1 weist eine Messertrommel 1 auf, welche das gehäckselte Gut einem Paar Quetschwalzen 2 zuführt. Diese werfen das Gut in einem verhältnismäßig steilen Förderschacht 3 nach oben, wo es von einem Nachbeschleuniger-Rotor 4 aufgenommen und durch einen oben anschließenden, nicht dargestellten Auswurfbogen weitergefördert wird. Diese Darstellung soll deutlich machen, wie beim Transport dieses Häckslers an den Innenflächen des Förderschachts 3 anhaftendes Gut sich abgelöst hat und oberhalb der Quetschwalzen 2 eine Ansammlung 5 bildet.

Bei der Erfindung hingegen ist der Nachbeschleuniger-Rotor 6 unmittelbar, d. h. so nahe wie möglich über den Quetschwalzen 7 angeordnet und er hat auch die gleiche Breite wie diese. Letzteres zeigt insbesondere Fig. 4.

In Fig. 2 ist die gesamte, als selbstfahrender Feldhäcksler ausgebildete Maschine mit ihren wichtigsten Teilen dargestellt. An eine vordere Aufnahmezinkentrommel 8 schließen sich verschiedene Einzugsorgane 9 sowie eine Messertrommel 10 an. Letzterer ist eine maschinenfeste Gegenschneide 11 sowie ein Gehäuse 12 zugeordnet.

Von der Messertrommel gelangt das gehäckselte Gut mit einem Steigungswinkel von etwa 60° bezüglich der Horizontalen zum Einlaßspalt der Quetschwalzen 7 und dann weiter zu dem Nachbeschleuniger-Rotor 6. Dessen Achse verläuft nahezu senkrecht über der Achse der linken Quetschwalze 7. An den Nachbeschleuniger-Rotor 6 schließt sich ein Förderschacht 13 an, dessen Mittelachse mit einem Winkel von etwa 80° bezüglich der Horizontalen wesentlich steiler verläuft. Dieser Förderschacht 13 hat unten einen schmalen Rechteckquerschnitt und geht nach oben in einen quadratischen Querschnitt über.

Wenn von der Innenwandung des Förderschachtes 13 anhaftendes feines Gut 14 sich ablöst und nach unten fällt, so bildet sich eine Ansammlung 15 auf wenigstens einem der Rotorblätter des Nachbeschleuniger-Rotors 6. Dies stört aber nicht, denn beim Wiederanlauf des Rotors entstehen so starke Fliehkräfte, daß sich auch schon verfestigte Ansammlungen auflösen und hinausgefördert werden.

## Patentansprüche

1. Häcksler zum Zerkleinern von halmförmigem Erntegut, insbesondere von Mais, mit einer Messertrommel (10), einem nachgeschalteten Paar Quetschwalzen (7) und einem nachgeschalteten Nachbeschleuniger-Rotor (6) mit jeweils parallelen Achsen, dadurch gekennzeichnet, daß die Messertrommel (10), die Quetschwalzen (7) und der Nachbeschleuniger-Rotor (6) die gleiche Breite haben.

2. Häcksler nach Anspruch 1, dadurch gekennzeichnet, daß der Förderschacht (13) steil ansteigt und daß der Nachbeschleuniger-Rotor (6) unmittelbar oberhalb der Quetschwalzen (7) angeordnet ist.

3. Häcksler nach Anspruch 1, dadurch gekennzeichnet, daß der Nachbeschleuniger-Rotor (6) die gleiche Drehrichtung wie die Messertrommel (10) hat.

4. Häcksler nach Anspruch 1, dadurch gekennzeichnet, daß die Drehrichtung des Nachbeschleuniger-Rotors (6) derjenigen der Messertrommel (10) entgegengesetzt ist.

5. Häcksler nach Anspruch 1, dadurch gekennzeichnet, daß Vorkehrungen getroffen sind, um den Nachbeschleuniger-Rotor (6) nach dem Abschalten seines Antriebs in einer Winkelstellung stillzusetzen, in welcher wenigstens eines seiner Rotorblätter den Förderschacht (13) absperrt.

## Claims

1. Chopper for chopping up stalk crops, especially maize, comprising a cutter drum (10), a pair of squeezing rolls (7) connected therebehind and an accelerating rotor (6) connected therebehind, all having mutually parallel axes, characterized in that the cutter drum (10), the squeezing rolls (7) and the accelerating rotor (6) have the same width.

2. Chopper according to Claim 1, characterized in that the delivery shaft (13) is steeply inclined and that the accelerating rotor (6) is disposed immediately above the squeezing rolls (7).

3. Chopper according to Claim 1, characterized in that the accelerating rotor (6) has the same direction of rotation as the cutter drum (10).

4. Chopper according to Claim 1, characterized in that the direction of rotation of the accelerating rotor (6) is opposite to that of the cutter drum (10).

5. Chopper according to Claim 1, characterized in that precautions are taken for stopping the accelerating rotor (6), after its drive has been shut off, in an angular position in which at least one of its rotor blades obstructs the delivery shaft (13).

## Revendications

1. Hacheuse pour fragmenter des produits de récolte du type céréale, en particulier du maïs, comportant un tambour de coupe (10), une paire de rouleaux de broyage (7) disposée en aval, et un rotor de post-accélération (6) disposé en aval, avec, à chaque fois, des axes parallèles, caractérisée en ce que le tambour de coupe (10), les rouleaux de broyage (7) et le rotor (6) de post-accélération ont la même largeur.

2. Hacheuse selon la revendication 1, caractérisée en ce que la cheminée de transport (13) présente une forte pente, et en ce que le rotor (6) de post-accélération est agencé directement au-dessus des rouleaux de broyage (7).

3. Hacheuse selon la revendication 1, caractérisée en ce que le rotor (6) de post-accélération présente le même sens de rotation que le tambour de coupe (10).

4. Hacheuse selon la revendication 1, caractérisée en ce que le sens de rotation du rotor (6) de post-accélération est opposé à celui du tambour de coupe (10).

5. Hacheuse selon la revendication 1, caractérisée en ce que des mesures sont prises pour arrêter le rotor (6) de post-accélération, après avoir coupé son entraînement, dans une position angulaire dans laquelle au moins une des ailettes du rotor ferme la cheminée de transport (13).
